# EUROPEAN PATENT APPLICATION

(11) **EP 4 693 619 A1**
(43) Date of publication of application: **11.02.2026**
(21) Application number: 24889058.4
(22) Date of filing: 04.11.2024
(51) Int. Cl.: H01M 10/6568, H01M 10/653, H01M 10/613, H01M 10/647, H01M 50/211

(54) **COOLING DEVICE AND BATTERY MODULE COMPRISING SAME**

(30) Priority: 07.11.2023 KR 20230152705
(71) Applicant: LG Energy Solution, Ltd., Seoul 07335 (KR)
(72) Inventor: KIM, Dooseung, Daejeon 34122 (KR); UM, Taeki, Daejeon 34122 (KR); LEE, Jung Hoon, Daejeon 34122 (KR)
(74) Representative: Plasseraud IP
(86) International application number: PCT/KR2024/017158
(87) International publication number: WO 2025/100870

(57) **Abstract**

A cooling device for dissipating heat from a battery cell, according to various embodiments, comprises: a first plate; a second plate; an adhesive layer interposed between the first plate and the second plate; and a cooling flow path formed through at least one space between the first plate and the second plate, wherein the second plate can include a rail-shaped protrusion that forms a partition wall between the adhesive layer and the cooling flow path. Other additional embodiments are possible.

## Description

### Technical Field

The present disclosure relates to a cooling device and a battery module including a same.

### Background Art

Since being rechargeable and dischargeable, a secondary battery is widely used in a mobile device such as a digital camera, a mobile phone, and a laptop computer. Particularly, the secondary battery is spotlighted as an energy source for an electric vehicle, an energy storage system (ESS), or the like. Meanwhile, as large capacity and high power are required in the electric vehicle and the energy storage system, a medium-large battery device such as a battery module receiving multiple secondary batteries inside a housing or a battery pack including multiple battery modules is widely used.

Since it is desired that the medium-large battery device is produced in small size and light weight when possible, a small rectangular battery, a pouch-type battery, or the like that may be piled to a high integration degree and has a light weight compared to a capacity is mainly used as a battery cell (e.g., a unit battery). Particularly, the pouch-type battery which uses an aluminum laminate sheet or the like as an exterior member is recently spotlighted because of benefits such as small weight, low production cost, and easy deformation.

Meanwhile, such a medium-large battery device may generate a large amount of heat in a charging and discharging process. Particularly, a laminate sheet of the pouch-type battery widely used in a high-power and large-capacity battery device has difficulty in effectively cooling a temperature of all battery cells as a surface thereof is coated with a polymer material having low thermal conductivity.

When heat of the battery device occurring in the charge and discharge process is not effectively removed, deterioration of the battery device is accelerated, and in some cases, ignition or explosion may be caused.

Thus, a cooling system for effectively cooling the battery cells embedded in the battery device is required.

### Detailed Description of the Invention

### Technical Goals

Meanwhile, in related arts, when two plates have been to be bonded in production of a cooling device, a brazing method has been mostly used due to a limitation on a bonding material property or the like, and all the two plates have been to be formed of an aluminum-manganese (Al-Mn)-based alloy material for application of the brazing method.

Various example embodiments of the present disclosure are proposed to solve at least a portion of the above-described objects and are to provide a cooling device(e.g., heat sink) using a scheme of bonding two plates forming the cooling device through an adhesive layer, so that flexibility of design the cooling device is secured and so that a weight is lightened and a mechanical strength property is improved.

Also, various example embodiments of the present disclosure are to provide a method of disposing a cooling device that adopts a structure for preventing a blockage of a cooling flow path due to a bonding scheme through an adhesive layer and is optimized for cooling a battery cell.

### Technical solutions

According to an aspect, there is provided a cooling device for heat emission of a battery cell, the cooling device including a first plate, a second plate, an adhesive layer interposed between the first plate and the second plate, and a cooling flow path formed through at least one space between the first plate and the second plate, and the second plate includes a protrusion part in a shape of a rail configured to form a partition between the adhesive layer and the cooling flow path.

The adhesive layer may not be interposed between the partition and the first plate.

The first plate may include a recess part joined to a shape of the protrusion part of the second plate.

The second plate may include a groove formed at an end portion spaced apart from the protrusion part among areas corresponding to the adhesive layer on a surface facing the first plate.

Each of the first plate and the second plate may be produced in an extrusion scheme.

The cooling device may be disposed at at least one of positions above and below a battery cell stack.

The first plate and the second plate may be formed of different materials.

A battery module may include a module case in which a battery cell stack is mounted inside the cooling device, and the cooling device may be disposed at an outside of the module case, and a thermal interface material (TIM) may be interposed between the battery cell stack and the cooling device.

According to another aspect, there is also provided a battery module including a cooling device, and a module case inside which a battery cell stack and the cooling device are mounted, and the battery module does not include a thermal interface material between the cooling device and the battery cell stack.

According to still another aspect, there is also provided a cooling device disposed between adjacent battery cells or between a battery cell and a module case

### Effects of the Invention

According to example embodiments, it is possible to provide a cooling device optimized in terms of design flexibility, lightening a weight, and improving a mechanical strength property by bonding two plates forming a cooling device through an adhesive layer.

According to example embodiments, in formation of the adhesive layer, it is possible to provide a structure preventing an adhesive material from flowing down toward a cooling flow path to interrupt a flow of a refrigerant.

According to example embodiments, it is possible to provide an effective method of disposing a cooling device optimized for cooling a battery cell and heat emission.

### Brief Description of Drawings

FIG. 1 is a schematic cross-sectional diagram illustrating a battery module according to an example embodiment of the present disclosure.
FIGS. 2A through 2C are schematic cross-sectional diagrams illustrating a battery module according to an example embodiment of the present disclosure.
FIG. 3 is a schematic cross-sectional diagram illustrating a battery module according to an example embodiment of the present disclosure.
FIG. 4 is an exploded perspective diagram illustrating a cooling device according to an example embodiment of the present disclosure.
FIG. 5 is a vertical cross-sectional diagram schematically illustrating a shape in which a cooling device of Fig. 4 is cut.
FIG. 6 is a schematic perspective diagram illustrating a second plate according to an example embodiment of the present disclosure.
FIG. 7 is a diagram for describing a battery pack including a battery module according to various example embodiments of the present disclosure.
FIG. 8 is a diagram for describing a vehicle including a battery pack according to various example embodiments of the present disclosure.

### Mode for Carrying Out the Invention

Before the present disclosure is described, terms or words used in the present disclosure and the accompanying claims are not to be limited to general definitions or dictionary definitions. The terms and words are to be construed under a principle that an inventor may appropriately define a concept of a term in order to describe their invention in the best way. Thus, since example embodiments described in the present disclosure and configurations illustrated in the accompanying drawings are merely most desirable example embodiments and do not represent all of the technical spirit of the present disclosure, it should be understood that various equivalents and modifications that may replace the example embodiments and configurations may be present at the time of filing the application of the present disclosure.

The same reference numerals or symbols illustrated in the accompanying drawings represent components or elements performing substantially identical functions. For convenience for description and understanding, example embodiments different from each other may be described with the same reference numerals or symbols. In other words, although a plurality of drawings illustrates elements having the same reference numeral, the plurality of drawings does not mean only one example embodiment.

In the following descriptions, terms in a singular form include terms in a plural form unless an apparently and contextually conflicting description is present. Terms such as "including" or "comprising" is to indicate that a feature, a number, an operation, an action, an element, a component, or a combination thereof is present. It should be understood that the terms are not to exclude in advance a possibility that one or more other features, numbers, operations, actions, elements, components, or combinations thereof may be present or added.

In addition, it should be noted in advance that an expression such as an upper side, an upper portion, a lower side, a lower portion, a side surface, a front surface, or a rear surface is based on directions illustrated in the drawings and that the expression may be changed when a direction of a corresponding object is changed.

Terms including an ordinal number such as "first" or "second" used in the present specification and claims may be used to distinguish elements. Such an ordinal number is used to contextually distinguish identical or similar elements from each other. Meanings of the terms may not be limited by use of the ordinal number. For example, a use order, a disposition order, or the like of elements with such an ordinal number may not be limitedly construed by the number. As required, ordinal numbers may be substituted with each other.

Hereinafter, the example embodiments of the present disclosure will be described with reference to the accompanying drawings. However, the idea of the present disclosure is not limited to the proposed example embodiments. For example, those skilled in the art who understand the idea of the present disclosure may propose another example embodiment included in the scope of the idea of the present disclosure through addition, change, removal, or the like of an element. However, the other example embodiment is also included in the scope of the idea of the present disclosure. Shapes, sizes, or the like of elements in the drawings may be exaggerated for clearer description.

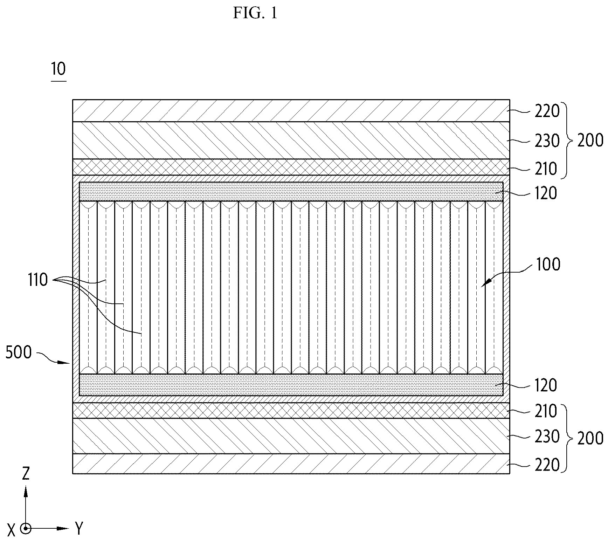

FIG. 1 is a schematic cross-sectional diagram illustrating a battery module 10 according to an example embodiment of the present disclosure.

Referring to FIG. 1, the battery module 10 according to an example embodiment may include a battery cell stack 100 provided in a form in which a plurality of battery cells 110 are stacked and a cooling device 200.

The cooling device 200 may be disposed at at least one of a side (e.g., an upper portion) and another side (e.g., a lower portion) of the battery cell stack 100 and may be configured to perform heat exchange with a battery cell 110 (or the battery cell stack 100) based on a refrigerant flowing along a cooling flow path 230. For example, the refrigerant may flow into the cooling device 200 from an outside in a cooled state and may warm up due to heat conducted from the battery cells 110 (or the battery cell stack 100) in a process of flowing in the cooling flow path 230 and be discharged back to the outside. Such a refrigerant may have a circulation structure of being cooled again in the outside, being injected into the cooling device 200, exchanging heat with the battery cells 110 (or the battery cell stack 100) while flowing, and then being discharged.

The battery cell 110 may include a rechargeable and dischargeable secondary battery. For example, the battery cell 110 may include a pouch-type secondary battery having a structure in which an electrode assembly is received in a flexible pouch, a rectangular battery in which an electrode assembly is received in a rectangular case having predetermined strength and rigidity, or a cylindrical secondary battery in which an electrode assembly is received in a cylindrical case. The battery cell stack 100 in a shape in which pouch-type secondary batteries are stacked in one direction will be described as a reference in the present disclosure, but it is merely an example description, and example embodiments of the present disclosure are not limited such a pouch-type secondary battery.

Meanwhile, in various example embodiments of the present disclosure, the battery module 10 may include a module case 500 surrounding an outer surface of the battery cell stack 100. At this point, as illustrated in FIG. 1, the cooling device 200 may be disposed at an outside (e.g., an upper portion and/or a lower portion of the module case 500) of the module case 500 to which the battery cell stack 100 is mounted.

In addition, in the battery module 10, a thermal interface material (TIM) 120 may be applied between the battery cell stack 100 and each cooling device 200 in order to facilitate heat exchange between the cooling device 200 and the battery cell stack 100. The thermal interface material 120 may serve as a medium of heat transfer between the cooling device 200 and the battery cell stack 100 in a structure in which the cooling device 200 does not directly face the battery cell stack 100 (e.g., a structure of FIG. 1 in which the module case 500 is interposed between the cooling device 200 and the battery cell stack 100). In various example embodiments, the thermal interface material 120 may include at least one of mineral oil, grease, gap filler putty, phase change gel, phase change material pads, or particle-filled epoxy and may include various materials with excellent thermal conductivity in addition thereto. For example, in various example embodiments of the present disclosure, the thermal interface material 120 may be formed of one of epoxy, urethane, or a silicon-based material.

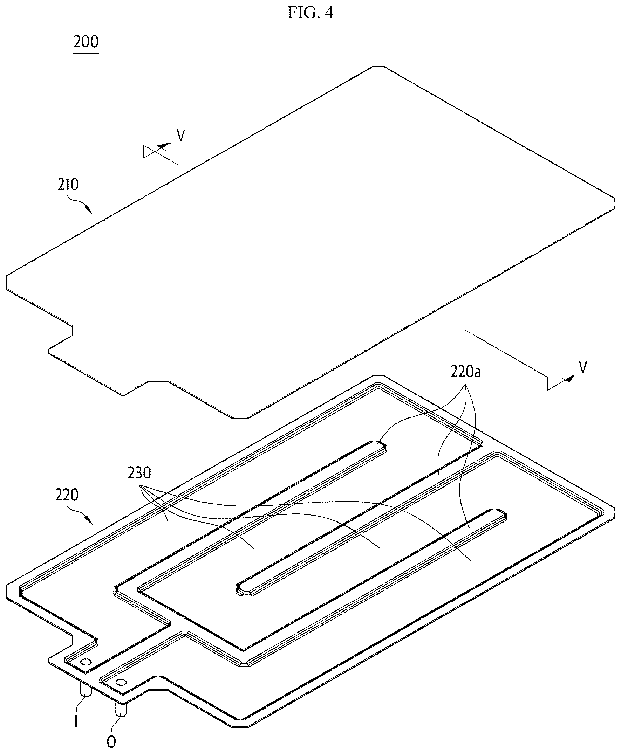

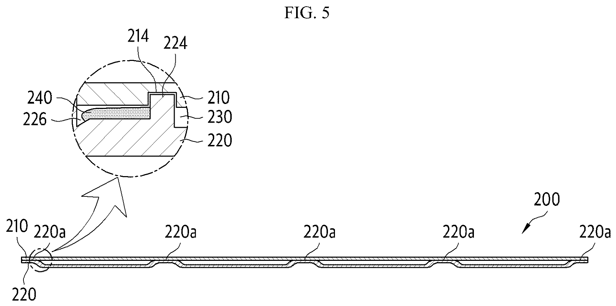

Meanwhile, in the cooling device 200 according to various example embodiments, a first plate 210 and a second plate 220 may be coupled to each other by an adhesive layer and may be formed so that the cooling flow path 230 in which the refrigerant flows is formed through a predetermined space (e.g., the cooling flow path 230 of FIGS. 4 and 5) between the first plate 210 and the second plate 220.

In the present disclosure, since the first plate 210 and the second plate 220 are bonded to each other based on the adhesive layer, a bonding scheme is not limited to a brazing scheme or the like, so that a benefit that materials of the first plate 210 and the second plate 220 may be diversified is present. In addition, each of plates 210 and 220 forming the cooling device 200 may be formed in an extrusion scheme or may be bonded through an adhesive material after being formed in a press scheme.

In addition, in an example embodiment, the cooling device 200 may include a structure for preventing the adhesive layer from overflowing into a space in which the cooling flow path 230 is formed in a process of bonding the first plate 210 and the second plate 220. A description thereof will be described below in detail with reference to FIG. 5.

In the cooling device 200 according to various example embodiments of the present disclosure, the first plate 210 and the second plate 220 may be formed of different materials as required.

For example, the first plate 210 corresponding to a plate adjacent to the battery cell 110 may be formed of a material with excellent thermal conductivity performance (e.g., an aluminum alloy) so as to be suitable for heat exchange with the battery cell stack 100, and the second plate 220 which is a plate disposed relatively far from the battery cell 110 may be formed of a material relatively useful for lightening a weight of the module 10 and securing insulation performance of an external portion thereof (e.g., an engineering plastic).

For example, the first plate 210 may be formed of a high-strength material such as an aluminum-magnesium (Al-Mg)-based alloy or aluminum-magnesium-silicon (Al-Mg-Si)-based alloy material or stainless steel (e.g., Steel Use Stainless (SUS)). In this case, when compared with a case in which the first plate 210 is formed of an aluminum-manganese (Al-Mn)-based alloy material for applying a brazing method, structural stability of the battery module 10 may be secured, and design flexibility may be improved. More specifically, as a comparative example, when the first plate 210 is formed of Al 3003 alloy that is one of Al-Mn-based alloy materials, a tensile strength thereof may be approximately 30 to 150 megapascals (MPa), but, as an example embodiment of the present disclosure, when the first plate 210 is formed of Al 6061 or Al 6063 alloy that is one of Al-Mg-Si-based alloy materials, a tensile strength thereof may be approximately 215 MPa to 280 MPa. As such, in various example embodiments of the present disclosure, a cooling device may be formed of a plate with a high-strength property, which has a high tensile strength, and through this, the structural stability of the battery module 10 may be secured.

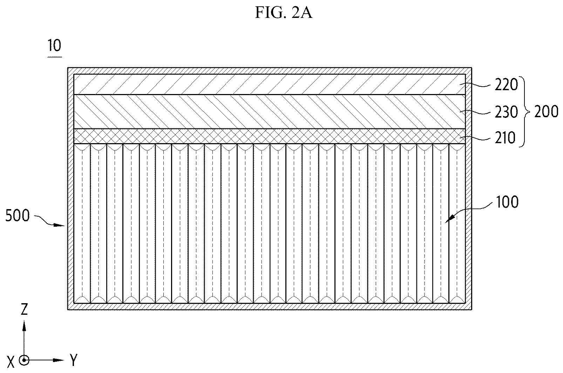

FIGS. 2A through 2C are schematic cross-sectional diagrams illustrating the battery module 10 according to various example embodiments of the present disclosure.

Referring to FIGS. 2A through 2C, the battery module 10 according to various example embodiments may include the battery cell stack 100 provided in a form in which the plurality of battery cells 110 are stacked and the cooling device 200 provided for cooling the battery cell stack 100, but the module case 500 may be disposed to surround all of the battery cell stack 100 and the cooling device 200 unlike example embodiments described with reference to FIG. 1.

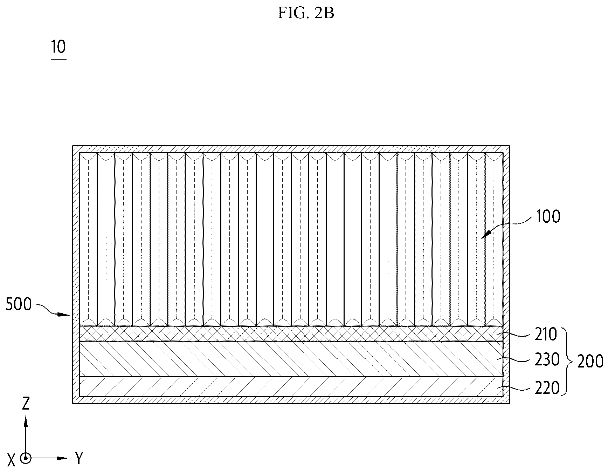

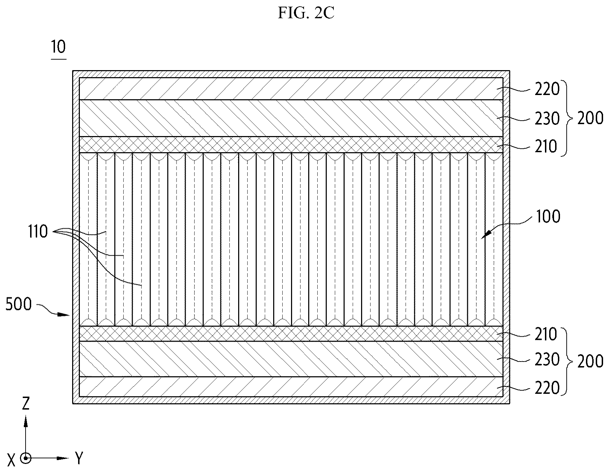

For example, the cooling device 200 may be disposed above the battery cell stack 100 as illustrated in FIG. 2A or may be disposed below the battery cell stack 100 as illustrated in FIG. 2B. Alternatively, the cooling device 200 may be provided above and below the battery cell stack 100 as illustrated in FIG. 2C.

When the cooling device 200 is positioned inside the module case 500 as shown in FIGS. 2A through 2C, since the cooling device 200 directly faces the battery cell stack 100, heat exchange with the battery cell 110 (or the battery cell stack 100) may be facilitated without including a thermal interface material (e.g., the thermal interface material 120 of FIG. 1). In this case, the battery module 10 having improved heat emission efficiency and also a further improved energy density property as having a shorter heat emission route when compared with a battery module including the thermal interface material 120 according to example embodiments of FIG. 1 may be provided.

Meanwhile, as described above with reference to FIG. 1, the first plate 210 and the second plate 220 of the cooling device 200 according to various example embodiments may be formed of different materials, and for example, the first plate 210 disposed to be adjacent to the battery cell 110 and the second plate 220 disposed relatively far from the battery cell 110 may be respectively formed of a material having a relatively high strength property (e.g., an Al-Mg-based alloy or Al-Mg-Si-based alloy material or a stainless steel (e.g., SUS) material) among materials having excellent heat transfer performance and a material that is light and an insulation property (e.g., an engineering plastic).

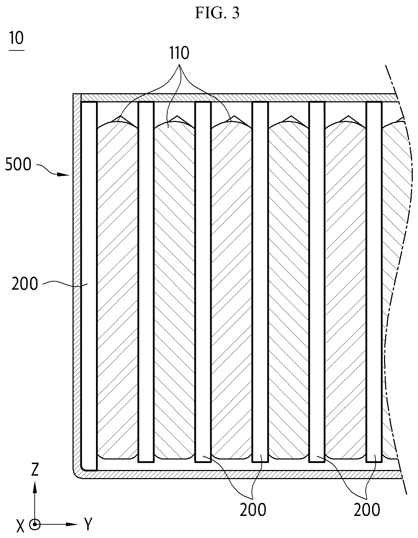

FIG. 3 is a schematic cross-sectional diagram illustrating a battery module 10 according to an example embodiment of the present disclosure.

Referring to FIG. 3, the battery module 10 according to an example embodiment may include the cooling device 200 interposed between the plurality of battery cells 110 and interposed between the battery cell 110 and the module case 500.

For example, the cooling device 200 may be positioned between the battery cells 100 (e.g., a pouch-type battery cell) which are stacked in one direction or positioned between an outermost battery cell 110 and the module case 500 to effectively cool the battery cell 110 as being in surficial contact with each of the battery cells 110.

In related arts, a plate used in a cooling device may be formed as a single plate while being produced in an extrusion scheme, and in this case, a size, a shape, or disposition of a space for forming a cooling flow path has been limited due to the plate being bent, which has decreased heat emission performance.

In contrast, when a scheme of bonding two plates through an adhesive layer, such as the cooling device of the present disclosure, is applied, flexibility of designing the cooling flow path may be secured because each of the two plates is producible in the extrusion scheme (or a press method).

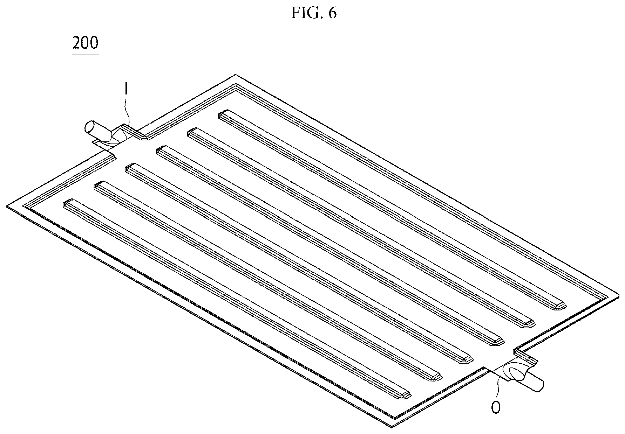

FIG. 4 is an exploded perspective diagram illustrating the cooling device 200 according to an example embodiment of the present disclosure. FIG. 5 is a vertical cross-sectional diagram schematically illustrating a shape taken along a line V-V of FIG. 4. FIG. 6 is an schematic perspective diagram illustrating the second plate 220 of the cooling device 200 according to an example embodiment of the present disclosure.

Referring to FIGS. 4 through 6, the cooling device 200 according to various example embodiments may include the first plate 210 and the second plate 220, and the first plate 210 and the second plate 220 may be bonded to each other by an adhesive member (e.g., an adhesive layer 240 of FIG. 5).

The cooling device 200 may include the cooling flow path 230 which is a flow route of a refrigerant formed through at least one space between the first plate 210 and the second plate 220.

The second plate 220 may include a bonding part 220a protruding toward the first plate 210 when viewed in a cross section and may be bonded to the first plate 210 through the adhesive member (e.g., the adhesive layer 240 of FIG. 5) at the bonding part 220a. In addition, an area 230 excluding the bonding part 220a from the second plate 220 may be used as the flow route of the refrigerant by forming a space relatively apart from the first plate 210.

Meanwhile, the cooling device 200 may have various shapes of the cooling flow path 230 that may form multiple heat transfer routes as illustrated in FIGS. 4 and 6.

In addition, the cooling device 200 may include a refrigerant inflow port I that communicates with the cooling flow path 230 and through which the refrigerant is injected from an outside and a refrigerant discharge port O that communicates with the cooling flow path 230 and through which the refrigerant is discharged to the outside. The refrigerant inflow port I may be configured to be injected with the refrigerant which is cooled from an external device, and the refrigerant discharge port O may be configured to discharge the refrigerant which absorbs heat from the plurality of battery cells 110 (or the battery cell stack 100) (see FIG. 1 or the like). The cooling flow path 230 may be connected to each of the refrigerant inflow port I and the refrigerant discharge port O.

According to various example embodiments, the adhesive layer 230 may be formed to the bonding part 220a which is a portion protruding toward the first plate 210 so that the second plate 220 is bonded to the first plate 210. For example, the adhesive layer 240 may be formed of a structural adhesive or adhesive tape and formed by a material having a thermosetting property (e.g., high-temperature setting or normal-temperature setting) or a moisture-curing property. For example, the adhesive layer 230 may be formed of a material of which at least one of an adhesive property, electric insulation, chemical resistance, and watertightness is excellent.

Meanwhile, in various example embodiments of the present disclosure, the second plate 220 may include a structure for preventing an adhesive material applied for forming the adhesive layer 240 in a thermosetting operation or an operation prior thereto from interrupting a flow of the refrigerant by flowing down toward the cooling flow path 230.

For example, the second plate 220 may include a protrusion part 224 serving as a partition between the adhesive layer 240 and the cooling flow path 230. The protrusion part 224 may have a shape of a rail extended in a length direction to correspond to a shape of the bonding part 220a and the cooling flow path 230. Accordingly, the adhesive material applied for forming the adhesive layer 240 may be blocked by the protrusion part 224 not to overflow to the cooling flow path 230.

Meanwhile, in an example embodiment, the first plate 210 may further include a recess part 214 corresponding to the protrusion part 224 of the second plate 220. The recess part 214 may be formed to be joined to a shape of the protrusion part 224, so that the recess part 214 as a slide guide structure may guide an accurate positional relationship at a time of coupling of the first plate 210 and the second plate 220 and so that the recess part 214 may contribute to structural stability between two plates 210 and 220 after the coupling and may further securely prevent the adhesive material forming the adhesive layer 240 from overflowing to the cooling flow path 230.

In an example embodiment, the second plate 220 may include a groove 226 at an end portion of a different side spaced apart from a portion at which the protrusion part 224 is formed among areas corresponding to the adhesive layer 240 on a surface facing the first plate 201, namely, areas in the bonding part 220a. The groove 226 may serve as a margin area in which the adhesive material forming the adhesive layer 240 is trapped, and through this, the adhesive material may not overflow toward the cooling flow path 230.

The groove 226 may have a structure having a declivity in a direction away from the cooling flow path 230 to guide the adhesive material so that the adhesive material flows into the groove 226 and may minimize a possibility that the adhesive material overflows toward the cooling flow path 230.

In some cases, the protrusion part 224 may be provided to one plate, which is positioned below, of the first plate 210 and the second plate 220 in consideration of a direction in which the cooling device 200 is disposed in the battery module 10. In other words, in a case of a module structure in which the second plate 220 is positioned below the first plate 210 (e.g., FIG. 2B), the protrusion part 224 may be provided to the second plate 220, and in a case of a structure in which the first plate 210 is positioned below the second plate 220 (e.g., FIG. 2A), the protrusion part 224 may be provided to the first plate 210. When the protrusion part 224 protrudes from a lower plate toward an upper plate, an additional benefit that a possibility of the refrigerant flowing into a space of the adhesive layer 240 beyond the protrusion part 224 may be minimized is present.

Meanwhile, it may be understood that the first plate 210 and the second plate 220 according to various example embodiments described in the present disclosure are for referring to and describing one and another one of the two plates 210 and 220 bonded to each other. Accordingly, a predetermined structure (e.g., the protrusion part 224 of FIG. 5, the groove 226, or the like) for preventing an overflow of the adhesive material and a bonding part (e.g., the bonding part 220a of FIG. 4) formed in a protruding manner for defining an area of each cooling flow path and bonding the two plates 210 and 220 may be formed to the first plate 210, not the second plate 220.

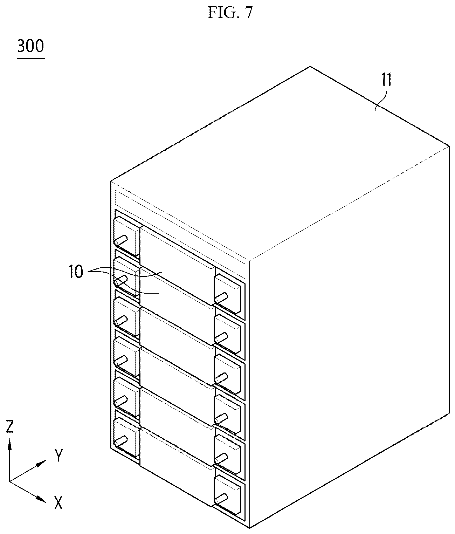

FIG. 7 is a diagram for describing a battery pack 1 including the battery module 10 according to various example embodiments of the present disclosure.

Referring to FIG. 7, the battery pack 1 according to the present disclosure may include at least one battery module 10 according to the above-described various example embodiments of the present disclosure.

For example, the battery pack 1 may include a pack case 11 for receiving the at least one battery module 10. Also, other various elements in addition to the battery module 10, for example, an element or the like of the battery pack 1, which has been publicly known at a time point of filling an application of the present disclosure, such as a battery management system (BMS), a pack case relay, a current sensor, or the like, may be further included.

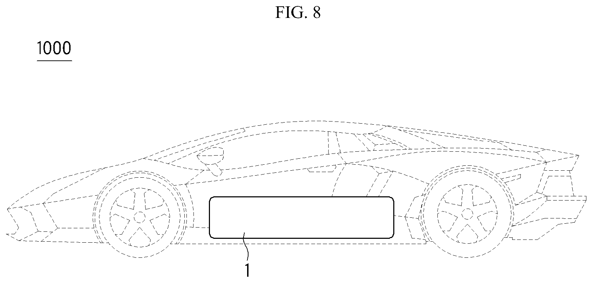

FIG. 8 is a diagram for describing a vehicle 1000 including the battery pack 1 of FIG. 7.

Referring to FIG. 8, the vehicle 1000 according to the present disclosure may include the at least one battery module 1 according to various example embodiments of the present disclosure.

Thus, according to the above-described various example embodiments, the battery module 10 with improved heat emission and insulation performance, the battery pack 1 which include a same, and a vehicle V may be provided.

Meanwhile, terms indicating a direction, such as "upper" and "lower", have been used in the present disclosure, but it is apparent to those skilled in the art that these terms are merely for convenient description and may be changed depending on a position of an object, a position of an observer, or the like.

The various example embodiments of the present disclosure have been described above in detail, but the scope of the present disclosure is not limited thereto. It will be apparent to those skilled in the art that various changes and modifications may be allowed within the range of the technical spirit of the present disclosure. In addition, the above-described example embodiments may be implemented without a portion of elements thereof, and each of the example embodiments may be implemented in combination with another.

## Claims

1. A cooling device for heat emission of a battery cell, the cooling device comprising:
a first plate;
a second plate;
an adhesive layer interposed between the first plate and the second plate; and
a cooling flow path formed through at least one space between the first plate and the second plate,
wherein the second plate comprises a protrusion part in a shape of a rail configured to form a partition between the adhesive layer and the cooling flow path.

2. The cooling device of claim 1, wherein the first plate comprises a recess part joined to a shape of the protrusion part of the second plate.

3. The cooling device of claim 1, wherein the second plate comprises a groove formed at an end portion spaced apart from the protrusion part among areas corresponding to the adhesive layer on a surface facing the first plate.

4. The cooling device of claim 1, wherein each of the first plate and the second plate is produced in an extrusion scheme.

5. The cooling device of claim 1, wherein the cooling device is disposed at at least one of positions above and below a battery cell stack.

6. The cooling device of claim 5, wherein the first plate and the second plate are formed of different materials.

7. The cooling device of claim 1, wherein the cooling device is disposed between adjacent battery cells or between a battery cell and a module case.

8. The cooling device of claim 1, wherein the adhesive layer is not interposed between the partition and the first plate.

9. A battery module comprising:
the cooling device of claim 5; and
a module case inside which a battery cell stack is mounted, wherein the cooling device is disposed at an outside of the module case, so that a thermal interface material (TIM) is interposed between the battery cell stack and the cooling device.

10. A battery module comprising:
the cooling device of claim 5; and
a module case inside which a battery cell stack and the cooling device are mounted,
wherein the battery module does not comprise a thermal interface material between the cooling device and the battery cell stack.
